# EUROPEAN PATENT APPLICATION

(11) **EP 2 634 454 A1**
(43) Date of publication of application: **04.09.2013**
(21) Application number: 12182444.5
(22) Date of filing: 30.08.2012
(51) Int. Cl.: F16F 15/32

(54) **Balancing weights with multi layer adhesive tape**

(30) Priority: 29.02.2012 US 201213408183
(71) Applicant: Bode, Felix, 97209 Veitshöchheim (DE)
(72) Inventor: Bode, Felix, 97209 Veitshöchheim (DE)
(74) Representative: Jöstingmeier, Martin

(57) **Abstract**

Balancing weights (10) for cars have an adhesive tape with at least a first tape layer (20) and a second tape layer (21), for attaching the balancing weights (10) to a rim. The first tape layer (20) is a comparatively stiff Polyethylene foam layer, while the second tape layer (21) is a comparatively flexible Polyurethane layer which compensates for variations of the surface of the rim.

## Description

### Field of the invention

The invention relates to balancing weights and belts of balancing weights with adhesive tapes.

### Description of the related art

In automotive wheel balancing, individual wheel balancing weights are applied to specific positions of a rim. Basically, two types of balancing weight are used. The first kind is a balancing weight which is attached by a clamp, as disclosed in the European patent EP 1 613 876 B1, while the second kind is fixed by means of a self-adhesive tape, as disclosed in US patent 6,364,421 B1.

Both kinds of balancing weights are available in a plurality of sizes, resulting in different weights. When balancing a vehicle wheel, the correct size of balancing weight is selected and attached to the rim. Most balancing weights are supplied as bulk material in boxes, from which the required number of weights is manually taken.

This allows for a simple, comparatively cheap supply of balancing weights. The drawback is that the person who is taking the weights from the box may take a wrong weight, and therefore a further step of balancing is required. Furthermore, the process of taking the weights can hardly be automated. Therefore, other solutions as disclosed in WO 2008/103651 A1, using a continuous polymer tape, have been developed. This has the drawback that a solid balancing weight is significantly more robust and reliable than these continuous tapes.

### Summary of the invention

The problem to be solved by the invention is to provide balancing weights and a belt of balancing weights to improve automated transport and dispension of vehicle balancing weights. Another problem to be solved by the invention is to provide adhesive balancing weights, which can be easily removed from an adhesive surface without leaving any residue.

Solutions of the problem are described in the independent claims. The dependent claims relate to further improvements of the invention.

In a first embodiment of the invention at least one balancing weight is attached to an adhesive tape. The adhesive tape has at least two different tape layers of different mechanical properties. Preferably one tape layer has an adhesive surface to hold the balancing weight and the tape at a rim. It is furthermore preferred to have a liner for protecting the adhesive surface of the tape. The liner has to be removed before applying the balancing weight to the rim.

In a further embodiment, there is at least one support layer provided to stabilize the balancing weights. Preferably, this support layer is a rigid or semi-rigid layer. This layer may be a sheet, foil, or tape of any material, preferably of metal (e.g. steel or aluminum) or a reinforced plastic material. Most preferably, this layer comprises a glass fiber or carbon fiber reinforced plastic material. This layer may also comprise a grid or mesh which may also be of metal or plastic, preferably a glass or carbon fiber reinforced plastic. This layer gives the whole assembly of tapes and weights some stiffness and prevents bending when the belt comprising of the tape and the balancing weights is transported from a dispenser and handed over to a robot or a person for being attached to a wheel rim.

In a preferred embodiment the tape has at least two tape layers of different materials, preferably two different foam layers. For example one tape layer may comprise Polyethylene (PE) while another layer may comprise Polyurethane (PU). Preferably a PU foam is used, which is comparatively soft and a ductile. Preferably this foam is close to the rim or may directly contact the rim or a base film as explained later. The properties of this foam allow for compensation of variations of the surface of the rim (leveling). It is preferred, if the PU foam has a density of 500kg/m³ with a tolerance of 20%, most preferably 10% above and below this value. At least another layer of PE foam is comparatively stiff and has a comparatively high shear force. This makes the whole belt of the balancing weights and the tapes comparatively stiff, so that a section of a plurality of balancing weights attached to a piece of tape may be handled as one piece. It may be sufficient to grip manually or by a robot only one of the plurality of balancing weights for handling and transporting the whole piece. It is preferred, if the PE foam has a density of 200kg/m³ with a tolerance of 20%, most preferably 10% above and below this value.

In another embodiment, the layers may have different thickness. It is preferred if any one layer is thinner than a second layer. Preferably another layer has twice the thickness of the first layer. The thickness of the layers may be in a range from 0.01 mm to 5 mm.

In a further embodiment the layers may have different densities, preferably different foam densities. It is preferred, if we densities are in a range from10 kg/m³ to 2000 kg/m³.

In another preferred embodiment, there may be a base film, which is a layer close to the bottom of the adhesive tape and therefore next to the rim. Preferably this base film bears the adhesive which holds the adhesive tape and the balancing weights to the rim. Before use, this adhesive on the base film surface is covered by a liner. Preferably the base film has a mechanical strength and most preferably a tensile strength which is sufficient to pull the base film together with the other layers and preferably with at least one balancing weight off the rim. This allows for easy removal of the balancing weights and the adhesive tape without damaging and without leaving adhesive tape residues at the rim surface. Without such a base film, in most cases, at least one of the foam layers breaks during removal, often causing pieces of the foam layer and other layers remaining at the rim. The base film protects the softer foam layers from getting torn.

It is further preferred, if at least one of the layers, preferably a layer close to the bottom of the adhesive tape, most preferably the base film bears some marking. This marking may be text, letters, numbers or even a bar code or any image. It may provide information for identifying the type of balancing weights, the manufacturing date, the manufacturer, or any other information. Marking of the layer may be done by stamping, printing, cutting, etching or by laser writing. Such marking allows a higher density of information than molding or engraving any marking on the surface of the balancing weight. Furthermore the marking process of the base film is cheaper and more flexible compared to marking of a balancing weight. The marking of the base film may change between individual balancing weights like a serial number changes from weight to weight. For the case, there is any further layer covering this marking, preferably this layer is transparent. Such a marking is preferred over a marking of the liner, as it allows easy identification of balancing weights, even with removed liner. A marked liner may no more be available when the balancing weights have been prepared for immediate application to rim or after used balancing weights have been removed from the rim.

It is further preferred, if at least one of the surfaces of the layers has acrylate adhesive on a surface. Such an adhesive may increase mechanical strength of the adhesive tape and/or may prevent separation of the different layers.

In another embodiment, there may be an opening, which may be a punching at least one of the tapes. There may be a metal part, preferably a magnetic part in such an opening. This may be used for automatic handling of the balancing weights together with the tapes. The opening may further be used to apply a vacuum for gripping the balancing weights and the tapes. It is further preferred, if at least one of the tapes has a through hole.

Furthermore, there may be magnetic particles in at least one of the layers, preferably in the base film. Alternatively, magnetic, particularly permanently magnetic, ribs can also be threaded into the base film. This facilitates handling of the balancing weight, because the adhesive balancing weight is easier to grip. If at least one of the layers, preferably the base film is embodied as magnetic, the adhesive balancing weight is also suitable for automated application, due to its magnetic support. In this case, it is not necessary to wait for the adhesive, or for the development of the adhesive effect thereof. The adhesive balancing weight is held securely in position, even immediately after its attachment to a magnetic adhesive surface.

### Description of Drawings

In the following the invention will be described by way of example, without limitation of the general inventive concept, on examples of embodiment with reference to the drawings.
Fig. 1 shows a first embodiment of balancing weights.
Fig. 2 shows chained small clip-on balancing weights in a side view.
Fig. 3 shows another embodiment of balancing weights.
Fig. 4 shows a further embodiment of balancing weights.
Fig. 5 shows a trapezoidal cross-section balancing weights in a side view.
Fig. 6 shows a detail of balancing weight tape layers.
Fig. 7 shows a different set of layers in detail.
Fig. 8 shows a different set of layers with a base film.
Fig. 9 shows some layers together with adhesive layers in detail.
Fig. 10 shows further layers together with adhesive layers in detail.

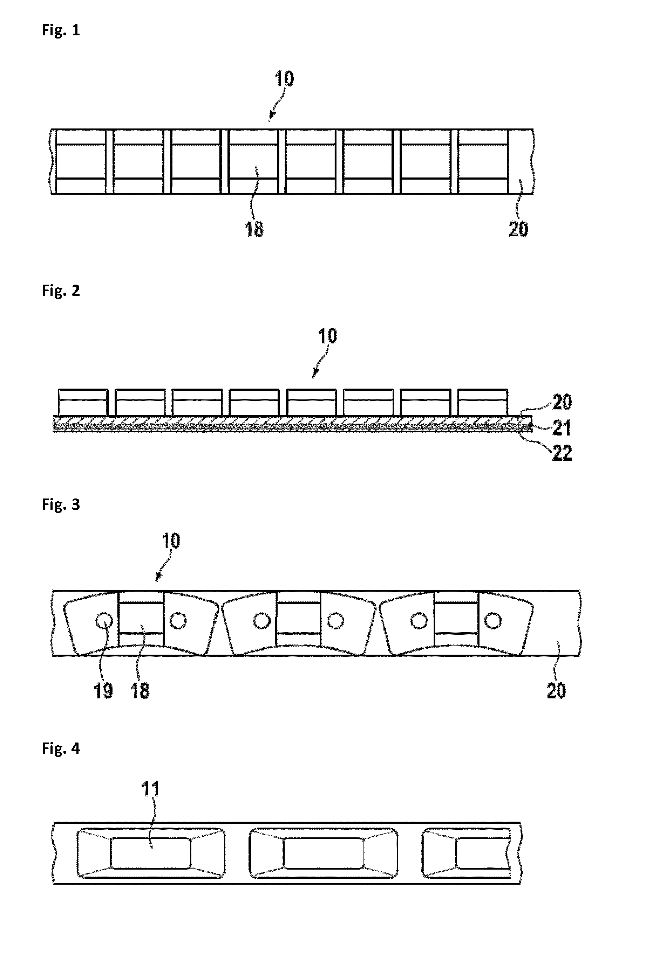

In Fig. 1 a preferred embodiment according to the invention is shown. Balancing weights 10 may have clip lock sections 18 to interface with a spring clip for attaching the weights to a rim. The balancing weights are placed on at least two tape layers, whereof the topmost layer 20 is shown. Balancing weights which are attached to a rim by adhesive only do not require the clip lock sections 18.

In Fig. 2 the previous balancing weights are shown in a side view. Here, the balancing weights are supported by top tape layer 20, bottom tape layer 21 and liner 22. The liner has to be removed before applying the balancing weight to a rim. The top tape layer 20 preferably acts as support layer and preferably is a rigid or semi-rigid layer. Preferably this layer comprises foam having higher stiffness and shear force compared to the bottom layer. Most preferably this layer comprises PE (Polyethylene) foam. The bottom tape layer 21 preferably acts as leveling layer and therefore preferably comprises foam having lower stiffness than the top tape layer. Most preferably this layer comprises PU (Polyurethane) foam. There may be a further support layer (not shown here) between the top tape layer 20 and the bottom tape layer 21. Depending on the requirements the properties of top tape layer 20 and bottom tape layer 21 may also be exchanged. There may also be a softer layer above and another softer layer below a stiffer layer stabilizing the assembly, while the softer layers are leveling and compensation for tolerances of the balancing weights and the rim.

In Fig. 3, another embodiment of balancing weights is shown. Preferably, the balancing weights 10 have at least one grip hole 19. Preferably, there are two grip holes 19 provided according to a generally known industrial standard. Furthermore, it is preferred to have at least one clip lock surface 18 on top of the balancing weight.

In Fig. 4, another embodiment of balancing weights 11 having a trapezoidal cross-section is shown.

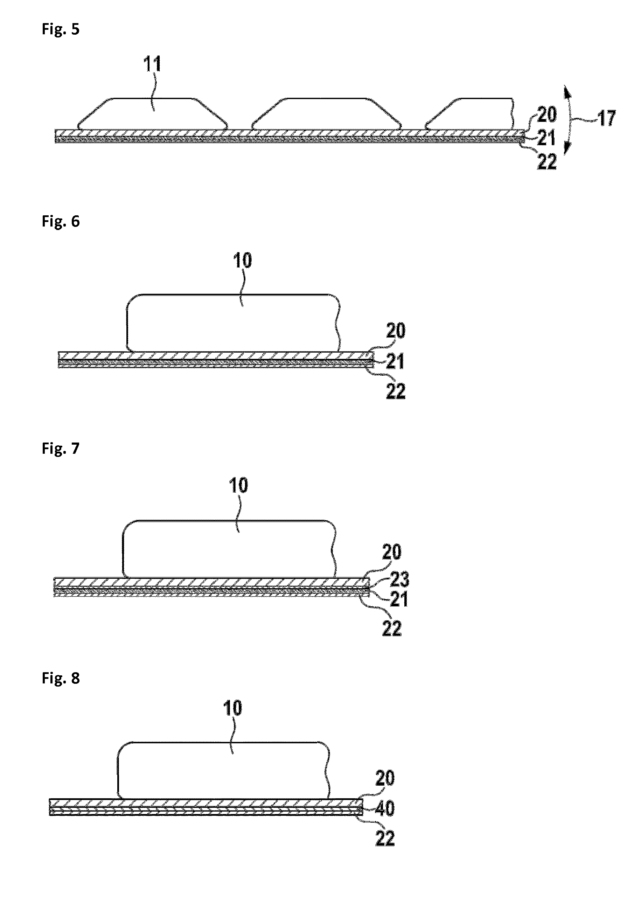

In Fig. 5, the previously shown balancing weights are shown in a side view. It is preferred to combine these balancing weights with any one of the tape layers, support layers, liners, and other layers as disclosed herein. Due to the trapezoidal design, this belt has some higher degree of flexibility in bending direction 17. Generally, all the embodiments described in this document should have a certain minimum stiffness in this bending direction 17 to allow automated and simplified handling, but they can intentionally be bent by applying a force.

In Fig. 6, a balancing weight is shown on different tape layers in detail. The balancing weight 10 is attached to top tape layer 20. Below this top tape layer 20 is bottom tape layer 21. This is furthermore protected by liner 22.

In Fig. 7, a different set of layers is shown in detail. A balancing weight 10 is attached to top tape layer 20. Below this layer is support layer 23 which comprises of a comparatively stiff material. Below this layer is bottom tape layer 21, which preferably comprises a comparatively soft material for leveling. This is furthermore protected by liner 22.

In Fig. 8 a different set of layers with a base film is shown. Here a base film 40 is arranged below top tape layer 20. Preferably top tape layer 20 comprises a comparatively soft material which is protected by the base film 40. Preferably the base film has a mechanical strength and most preferably a tensile strength which is sufficient to pull the base film together with the other layers and preferably with at least one balancing weight off the rim. This allows for easy removal of the balancing weights and the adhesive tape without damaging and without leaving adhesive tape residues at the rim surface. Without such a base film, in most cases, at least one of the foam layers breaks during removal, often causing pieces of the foam layer and other layers remaining at the rim. The base film protects the softer foam layers from getting torn. The base film may be used in any combination with the layers disclosed herein.

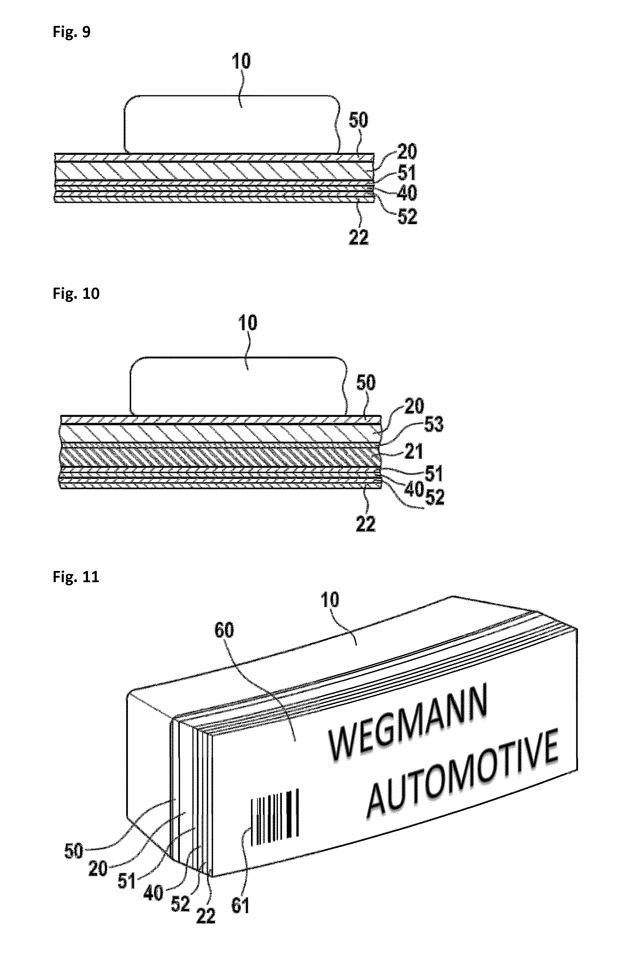

In Fig. 9 layers are shown in detail together with adhesive layers. This figure refers to the assembly of Fig. 8. Here in addition adhesive layers 50, 51, 52 are shown. The first adhesive layer 50 fixes balancing weights 10 to the top tape layer 20. The base film 40 is connected to the top tape layer 20 by means of second adhesive layer 51. Furthermore third adhesive layer 52 is used to hold the whole assembly including or layers and the balancing weights to a rim. This adhesive layer is protected by liner 22. Herein for simplicity the term adhesive layer is used. These adhesive layers are different from the further layers like top tape layer 20, bottom tape layer 21 or support layer 23. The main function is to connect neighboring layers or to hold the assembly to a rim. Generally an adhesive layer may comprise of a thin film of adhesive, preferably of an acrylate. Some of the layers, preferably top tape layer 20 and bottom tape layer 21 may be connected by other means like melting.

In Fig. 10 an embodiment with a further bottom tape layer 21 is shown.

In Fig. 11 an embodiment similar to Fig. 9 is shown. Here the base film 40 has some marking like a text 60 identifying the manufacturer or a bar code 61. In this preferred embodiment the adhesive layer 52 and the liner 22 are transparent. In the case of a non-transparent liner, the marking will become visible after the liner has been removed.

### List of reference numerals

- 10: balancing weight
- 11: trapezoidal balancing weight
- 17: bending direction
- 18: clip lock
- 19: grip hole
- 20: top tape layer
- 21: bottom tape layer
- 22: liner
- 23: support layer
- 40: base film
- 50 - 53: adhesive layers
- 60: marking
- 61: barcode

## Claims

1. Balancing weights (10) for cars, having an adhesive tape having at least a first tape layer and a second tape layer, for attaching the balancing weights to a rim,
the first tape layer being stiffer and less flexible than the second tape layer,
the second tape layer being softer and more flexible than the first tape layer.

2. Balancing weights (10) according to claim 1,
**characterized in, that**
the first tape layer comprises of a Polyethylene foam.

3. Balancing weights (10) according to any one of the preceding claims,
**characterized in, that**
the second tape layer comprises Polyurethane foam.

4. Balancing weights (10) according to any one of the preceding claims,
**characterized in, that**
the first tape layer is close to the balancing weights and the second tape layer is close to the rim.

5. Balancing weights (10) for cars, having an adhesive tape having at least one tape layer (20) and an adhesive layer (52) for attaching the balancing weights to a rim,
**characterized in, that**
a base film (40) is provided between the at least one tape layer and the adhesive layer, wherein the base film has a higher tensile strength than the at least one tape layer (20).

6. Balancing weights (10) according to claim 5,
**characterized in, that**
the base film (40) bears at least a visible marking.

7. Balancing weights (10) according to claim 5,
**characterized in, that**
the base film (40) bears at least a visible marking.

8. Balancing weights (10) according to claim 5,
**characterized in, that**
the adhesive layer (52) is transparent.

9. Balancing weights (10) according to claim 5,
**characterized in, that**
the base film (40) bears magnetic particles or parts.
